# EUROPÄISCHE PATENTSCHRIFT

(11) **EP 3 049 570 B1**
(45) Veröffentlichungstag und Bekanntmachung des Hinweises auf die Patenterteilung: **05.06.2019**
(21) Anmeldenummer: 13766987.5
(22) Anmeldetag: 27.09.2013
(51) Int. Cl.: D21H 27/30, C08F 220/14, D21H 17/24, D21H 17/25, D21H 17/28, D21H 17/37, D21H 17/42, D21H 17/43, D21H 17/53, D21H 17/67, D21H 19/44, D21H 19/64, B44C 5/04, D21H 27/28, B32B 29/00, B32B 21/06, C08F 120/06, C08L 33/02, D21H 17/68, D21H 23/22

(54) **DISPERSION ZUR HERSTELLUNG SCHEUERFESTER OBERFLÄCHEN**
DISPERSION FOR PRODUCING ABRASION-RESISTANT SURFACES
DISPERSION SERVANT À PRODUIRE DES SURFACES RÉSISTANTES À L'ABRASION

(43) Veröffentlichungstag der Anmeldung: 03.08.2016
(73) Patentinhaber: Xylo Technologies AG, 9052 Niederteufen (CH)
(72) Erfinder: DÖHRING, Dieter, CH-9052 Niederteufen (CH); HÄRTL, Oliver, A-6971 Hard (AT)
(74) Vertreter: Mader, Joachim
(86) Internationale Anmeldenummer: PCT/EP2013/070184
(87) Internationale Veröffentlichungsnummer: WO 2015/043647

(56) Entgegenhaltungen:
- EP-A1- 0 732 449
- EP-A1- 1 186 708
- DE-T2- 69 107 370

## Beschreibung

### 1. Gebiet der Erfindung

Die vorliegende Erfindung betrifft eine Dispersion zur Herstellung von mit Harz imprägnierten Papieren, wie sie für die Herstellung von scheuerfesten (mikrokratzfesten) Oberflächen, wie etwa von Laminatfußböden, Möbeloberflächen oder Schichtstoffen (CPL, HPL) verwendet werden können. Die Erfindung betrifft zudem ein entsprechendes Verfahren zur Herstellung derartiger Oberflächen sowie entsprechend hergestellte Produkte.

### 2. Hintergrund der Erfindung

Aus dem Stand der Technik ist eine Vielzahl von Werkstoffen mit abriebfesten Oberflächen bekannt, die als Fußbodenbeläge oder Möbeloberflächen verwendet werden. Besonders verbreitet sind hierbei Laminatfußböden, die relativ kostengünstig sind und hervorragende abriebfeste Oberflächen aufweisen. Üblicherweise basieren derartige Laminatfußböden auf einer Trägerplatte oder Trägerschicht aus MDF- oder HDF-Werkstoff, auf dessen Oberseite ein oder mehrere mit Harz getränkte Papierlagen aufgebracht sind. Die verwendeten Harze sind typischerweise Aminoharze, die durch Verpressen unter Einwirkung von Hitze und Druck aushärten. Um die Abriebfestigkeit der Oberflächen zu erhöhen, werden die Harze bzw. die imprägnierten Papiere zudem häufig mit abriebfesten Partikeln versehen. Hierzu können dem Harz vor dem Imprägnieren des Papiers abriebfeste Partikel in einer Korngröße von typischerweise 40 bis 140 µm zugegeben werden und/oder die Partikel werden nach dem Imprägnieren auf das noch nicht getrocknete Papier gegeben, also bevor dieses ausgehärtet wird.

In der EP 0 732 449 A1 wird hierzu eine besondere Harzmischung vorgeschlagen, die aus einem Gemisch aus Wasser, Melaminharz, Alpha-Zellulose in vorbestimmter Faserlänge und Menge und Korundpulver mit einer Korngröße von ca. 20 bis 50 µm besteht. Dabei soll das Korundpulver im Gemisch fein dispergiert sein und an den Fasern der Alpha-Zellulose fixiert werden. Hierdurch verbleibt das Mineral homogen in Dispersion und die Zellulosefasern sorgen dafür, dass das im Gemisch befindliche Harz nicht mehr in den Dekorbogen penetriert, sondern vielmehr im Wesentlichen an der Oberfläche verbleibt und eine relativ dicke Harzschicht bildet.

Die EP 2 288 500 B1 offenbart ebenfalls ein Laminat und ein Verfahren zu dessen Herstellung. Diesem Dokument liegt das Problem zugrunde, dass die zugegebenen abriebfesten Partikel zum Einen einen Verlust an Glanz und Transparenz des Laminats herbeiführen und zum Anderen die zur Herstellung des Laminats eingesetzten Pressbleche beschädigen bzw. abnutzen. Als Lösung schlägt diese Veröffentlichung vor, in einem ersten Schritt ein Papier mit einem Aminoplastharz zu imprägnieren und zu trocknen. Auf dieses bereits imprägnierte Papier soll dann eine Dispersion bestehend aus oberflächenmodifizierten Silika-Nanopartikeln und einem Dispersionsmittel aufgebracht werden. Das Dispersionsmittel soll dabei beispielsweise aus Wasser oder polaren Lösungsmitteln bestehen. Durch die Verwendung der oberflächenmodifizierten Silika-Nanopartikeln soll es zu einer verbesserten Verträglichkeit der Nanopartikel mit der Aminoplastharzmatrix kommen, woraus eine homogene Verteilung der Nanopartikel in der Harzmatrix und eine gleichmäßige Verteilung über die Fläche des bereits imprägnierten Papiers kommen soll. Dabei soll aus der verbesserten Einbettung der Nanopartikel eine deutlich verbesserte Widerstandsfähigkeit der so geschaffenen Oberfläche resultieren. Ein derartig hergestelltes Laminat soll sich zur Verwendung als Fußbodenbelag, Tischplatte oder allgemein in der Möbelherstellung zur Herstellung weiterer Möbel eignen. Auf diese Weise können mikrokratzfeste Oberflächen erzeugt werden, die Vorgehensweise ist jedoch sehr kostenaufwendig.

Aus der EP 2 397 448 A1 ist die Herstellung und Anwendung von Pulvermaterialen auf Glasbasis bekannt, die für die Verwendung in Melaminharzen und Ähnlichem zur Beschichtung von Fußbodenpaneelen besonders geeignet sind. Beispielsweise soll feingeriebenes Borosilikatglas gut mit Melaminharz verarbeitet werden können, wohingegen feingemahlenes Natronkalkglas als Zusatz zum Melaminharz weniger geeignet ist, da hiermit kein homogener, geschlossener Film gebildet werden kann. In diesem Dokument wird damit bereits die Problematik angesprochen, dass nicht jeder Zusatz zur Verarbeitung mit einem Melaminharz oder Ähnlichem geeignet ist, sondern es im Gegenteil äußerst schwierig ist geeignete Materialien zu finden.

Aus der WO 2007/048731 A1 ist ein Aminoharz bekannt, dass mit anorganischen Nanopartikeln versehen ist, wie beispielsweise Siliziumoxidpartikeln in einer Größe von 2 bis 500 nm. Die Nanopartikel sollen dabei dazu dienen, Oberflächen, die mit dem Aminoharz versehen sind, abriebfester zu machen.

In der EP 0 136 577 A2 sind dekorative Laminate beschrieben, die ein mit einem Harz imprägnierte Dekorpapiere aufweisen, die auf eine Trägerplatte aus z.B. Faserplatten oder ähnlichem aufgebracht sind. Um die Kratzfestigkeit der Oberfläche zu erhöhen, werden dieser Nanopartikel in einer Größe von 5 bis 100 nm zugegeben.

Aus der EP 1186 708 ist ein Verfahren zur Herstellung von abriebfesten Papieren bekannt, sowie die Herstellung einer Dispersion von Wasser, Korundpartikeln und weiteren Hilfsmitteln. Die Verwendung von geeigneten Dispergierhilfsmitteln wird hierin nicht thematisiert.

Während die aus dem Stand der Technik bekannten Methoden zwar zu zufriedenstellenden Abriebwerten führen können, so weisen die erzeugten Oberflächen trotzdem eine unbefriedigende Scheuerfestigkeit (auch Kratzfestigkeit oder Mikrokratzfestigkeit genannt) auf und/oder die Herstellung der Oberflächen ist aufwendig bzw. teuer. Unter Scheuerfestigkeit bzw. Mikrokratzfestigkeit versteht der Fachmann die Widerstandsfähigkeit von Oberflächen gegen Kratzer mit sehr geringer Tiefe, die häufig schon durch Reinigungsvorgänge mit an sich weichen Materialien entstehen können. Derartige Mikrokratzer haben typischerweise eine Tiefe von nicht mehr als ca. 6 µm und stellen insbesondere eine optische Beeinträchtigung der Oberflächen dar und nicht so sehr eine Beeinträchtigung der Funktionseigenschaften. Eine Oberfläche kann daher sehr wohl eine gute Abriebfestigkeit aufweisen - und mithin den typischen Belastungen gut widerstehen, die zu tiefen Kratzern führen (also in der Größenordnung von Bruchteilen von Millimetern) - und dennoch empfindlich gegen Mikrokratzer sein. Mit anderen Worten: eine auf gute Abriebfestigkeit optimierte Oberfläche ist regelmäßig nicht unbedingt auch im Hinblick auf Kratzfestigkeit optimal.

Bei Aminoharzen gab es immer wieder Versuche zur Nanopartikelmodifizierung, die sich aber aus Kostengründen und auf Grund von Verarbeitungsschwierigkeiten bisher nicht durchgesetzt haben. Im Gegensatz zu den Aminoharzen lassen sich in Acrylatharzen sehr viel einfacher Nanopartikelmodifizierungen vornehmen, die zu verbesserter Kratzfestigkeit führen. Bei mit Acrylatharzen beschichteten Oberflächen entspricht es heute dem Stand der Technik, sehr hohe Mikrokratzfestigkeit zu erreichen. Als Beispiel sei das X-add®KR9006 der Nano-X GmbH genannt. Sollen Aminoharzoberflächen gegenüber Acrylatharzoberflächen auch in Zukunft wettbewerbsfähig sein, so bedarf es hier wirtschaftlich und technisch tragfähiger Entwicklungen.

Der vorliegenden Erfindung liegt daher die Aufgabe zugrunde, eine besondere Dispersion zur Herstellung eines mit einem Harz imprägnierten Papiers bereitzustellen, mit der abriebfeste Partikel geeignet zugeführt werden können, so dass hiermit hergestellte Oberflächen eine verbesserte Mikrokratzfestigkeit haben. Es ist dabei insbesondere Aufgabe der Erfindung eine Dispersion zu schaffen, die gut zusammen mit den üblicherweise verwendeten Harzen verarbeitet werden kann und in der sehr feine abriebfeste Partikel mit einer durchschnittlichen Größe von nur ca. 18 bis 1 µm (entsprechend der FEPA Norm 42-2 (2006) für die Produkte F400 bis F2000) sehr homogen dispergiert werden können. Es ist zudem Aufgabe der Erfindung ein Verfahren zur Herstellung von Laminat-Werkstoffen bereit zu stellen, die zur Herstellung von z.B. Laminatfußböden, Möbeloberflächen etc. geeignet sind, sowie ein derartiges Produkt, bei dem relativ feine Korundpartikel zur Anwendung kommen und dass eine hervorragende Kratzfestigkeit aufweist.

Diese Aufgaben werden mit einer Dispersion gemäß Anspruch 1, einem Verfahren zur Herstellung eines Laminat-Werkstoffs gemäß Anspruch 7 sowie einem Laminat-Werkstoff gemäß Anspruch 12 gelöst.

### 3. Ausführliche Beschreibung der Erfindung

Gemäß der vorliegenden Erfindung wird eine Dispersion zur Herstellung eines mit einem Harz imprägnierten Papiers bereitgestellt, dass die folgenden Bestandteile in Gewichtsprozent enthält: 30 bis 75 % Wasser; 10 bis 65 % Korundpartikel mit einer Korngröße von F400 bis F2000 (nach FEPA-Standard); 0,05 bis 5 % anionische Dispergiermittel, 0,1 bis 5 % nichtionische Tenside; 0,05 bis 5 % Natrium-Polyacrylat und 0,01 bis 2 % Verdickungsmittel.

Es hat sich gezeigt, dass in einer derartigen Dispersion auch relativ feine Korundpartikel mit einer Korngröße von nur F400 bis F2000 (entspricht einer Korngröße von ca. 18 bis 1 µm) sehr homogen dispergiert werden können und auch für lange Zeit in Dispersion bleiben, d. h. sich nicht absetzen und auch keine Agglomerate bilden. Wichtiger ist beinahe noch, dass diese Dispersion sehr gut mit den üblichen Harzen, wie insbesondere Aminoharzen, zusammenwirkt ohne dass es zu den im Stand der Technik beschriebenen Problemen kommt, wie etwa ein Absetzen der Korundpartikel, eine Trübung des Harzes oder eine unzureichende Filmbildung und ähnliches. Die erfindungsgemäße Dispersion erlaubt die Verwendung von Korundpartikeln mit der angegebenen kleinen Korngröße, die bei korrekter Anwendung überraschend zu Oberflächen mit sehr guter Mikrokratzfestigkeit (Scheuerfestigkeit) bereits bei sehr geringen Zusatzmengen führen.

Üblicherweise sind Partikel mit größerem Durchmesser wünschenswert, wenn besonders hohe Abriebwerte erreicht werden sollen. Jedoch führen große Partikel nicht zu verbesserten Kratzfestigkeitswerten, d.h. während die großen Partikel gut gegen große und schwere mechanische Einflüsse schützen, können sie nicht die Entstehung von Mikrokratzern (bis ca. 6 µm tief) unterbinden, die zum Beispiel schon durch Reinigungsvorgänge mit einem Tuch entstehen können.

Generell bevorzugt ist die Dispersion (in Gewichtsprozent) wie folgt aufgebaut bzw. umfasst folgende Anteile:
35 bis 70 % Wasser; 20 bis 60 % Korundpartikel mit einer Korngröße von F400 bis F2000; 0,06 bis 4 % anionische Dispergiermittel; 0,06 bis 4 % Natrium-Polyacrylat; 0,15 bis 4 % nichtionische Tenside und 0,02 bis 2 % Verdickungsmittel.

Noch mehr bevorzugt ist die Dispersion wie folgt aufgebaut bzw. umfasst folgende Anteile: 40 bis 68 % Wasser; 30 bis 58 % Korundpartikel mit einer Korngröße von F400 bis F2000; 0,07 bis 3,5 % anionische Dispergiermittel; 0,07 bis 3,5 % Natrium-Polyacrylat; 0,2 bis 3,5 % nichtionische Tenside und 0,03 bis 2 % Verdickungsmittel.

Als Verdickungsmittel kommen bevorzugt Schichtsilikate und/ oder Polysaccharide zum Einsatz.

Es hat sich zudem gezeigt, dass eine besonders gute Einbettung der feinen Partikel in einer späteren Harzmatrix möglich ist, wenn die verwendeten Korundpartikel silanisiert sind.

Grundsätzlich erlaubt die erfinderische Dispersion sogar die Verwendung von Korundpartikeln mit einer Korngröße von nur F500 bis F2000 und am meisten bevorzugt liegt die Partikelgröße von F600 bis F1000. Dem Fachmann sind die Bezeichnungen F400, F600 etc. zur Bestimmung der Korngröße aus der FEPA-Norm 42-2 (2006) bekannt. Die vorliegende Erfindung betrifft auch ein Verfahren zur Herstellung eines Laminat-Werkstoffs, der etwa zur Herstellung von Möbeln und Fußbodenpaneelen geeignet ist, welches die folgenden Schritte umfasst:
Ausgangsbasis für das Herstellverfahren ist eine Dispersion, wie sie oben beschrieben wurde. Diese Dispersion wird in eine wässrige, d.h. flüssige Harzmischung (bevorzugt Aminoharzmischung) eingebracht, wobei vorzugsweise auf 100 kg Harz (bezogen auf den Feststoffgehalt in der flüssigen Harzmischung) 0,5 bis 7 kg Dispersion eingebracht werden, mehr bevorzugt 0,5 bis 5 kg und am meisten bevorzugt 0,6 bis 3 kg. Als Berechnungsbasis soll hierbei der Feststoffgehalt des Harzes dienen. Derartige Harze werden handelsüblich in wässriger Lösung angeboten, wobei der Feststoffgehalt in der Regel zwischen 50 - 60 % variiert. Der Feststoffgehalt wird von den Anbietern derartiger Harzmischungen angegeben oder kann auf dem Fachmann bekannte Art bestimmt werden. Beispielhaft wird hier auf die EN 827(2005.7.6.1) verwiesen, in der die Bestimmung des Feststoffgehaltes von Bindemitteln geregelt ist. Nach Rühren und homogener Verteilung der Dispersion in der Harzmischung wird hiermit ein Papier imprägniert, beispielsweise über einen Walzenauftrag. Das Papier kann jedoch auch durch ein Bad mit der Harzmischung geführt werden. Das so imprägnierte Papier wird dann z.B. auf eine Trägerlage aus Holz oder einem Holzwerkstoff aufgelegt und dann unter Einwirkung von Hitze und Druck auf dieser Trägerlage ausgehärtet. Vorzugsweise ist das Harz dabei ein Aminoharz, nämlich insbesondere ein Melaminharz und/oder Harnstoffharz, wie sie bei der Herstellung von Laminatfußböden üblicherweise verwendet werden. Selbstverständlich können noch weitere zusätzliche Herstellschritte vorgenommen werden.

Bei der Schichtstoffherstellung werden beispielsweise Phenolharzgetränkte Kraftpapiere kombiniert, wobei sich die Anzahl und Grammatur nach der gewünschten Endstärke des Materials richtet. Auf diese Kernlagen aus Kraftpapier wird ein aminoharzgetränktes Dekorpapier gelegt und als oberste Schicht wird ein Overlay verwendet. Dieses Overlay wird beispielsweise mit der die Dispersion enthaltenden Harzmischung imprägniert. Soll kein Overlay verwendet werden, kann auch das Dekorpapier mit der die Dispersion enthaltenden Harzmischung imprägniert werden. Der Verbund wird dann auf an sich dem Fachmann bekannte Art und Weise unter Einwirkung von Hitze und Druck verpresst.

Es hat sich herausgestellt, dass für die Herstellung der erfindungsgemäßen Dispersion eine relative hohe Scherrate beim Verrühren der Dispersion von Vorteil ist, nämlich insbesondere wenn die Dispersion vor dem Einbringen in die Harzmischung für mindestens 10 Minuten mit einer Scherrate von zumindest 10 m/sec, vorzugsweise zumindest 12 m/sec und am meisten bevorzugt zumindest 15 m/sec verrührt wird.

Mit Hilfe der erfindungsgemäßen Dispersion bzw. dem erfindungsgemäßen Herstellverfahren lassen sich Laminat-Werkstoffe herstellen, die neue und bis dato noch nicht erzielbare Eigenschaften aufweisen. Laminate bzw. Laminat-Werkstoffe, die mit der vorliegenden Dispersion bzw. mittels des vorliegenden Verfahrens hergestellt sind, weisen nämlich hervorragende Kratzfestigkeiten auf, obwohl sie nur mit sehr feinen abriebfesten Partikeln mit einer Korngröße von F400 bis F2000 versehen sind und diese zudem bevorzugt nur in einer äußerst geringen Masse aufgebracht werden, nämlich von 0,3 bis 3 g/m², bevorzugt von 0,3 bis 2 g/m², noch mehr bevorzugt von 0,4 bis 1,5 g/m² und am meisten bevorzugt von 0,4 bis 1 g/m².

Dementsprechend betrifft die Erfindung auch Laminat-Werkstoffe aufweisend eine Trägerlage aus Holz, einem Holzwerkstoff oder einem Schichtstoff, wobei eine Hauptseite der Trägerlage in der bevorzugt obersten Schicht ein mit einem Aminoharz imprägniertes Papier umfasst, das Korundpartikel mit einer Korngröße von F400 bis F2000 umfasst. Eine so verpresste Oberfläche weist eine Mikrokratzfestigkeit nach EN16094: 2012-04 von zumindest MSR-A2, vorzugsweise MSR-A1 auf und weist zudem eine Beständigkeitsklasse von zumindest MSR-B2 und vorzugsweise sogar MSR-B1 auf. Das Laminat ist erhältlich durch Imprägnieren des Papiers mit dem oben beschriebenen Verfahren, nämlich mit einer erfindungsgemäßen Dispersion, die in eine flüssige Harzmischung in einem bestimmten Mengenverhältnis eingebracht wurde. Soll der erfindungsgemäße Laminat-Werkstoff beispielsweise als Fußbodenbelag dienen, bzw. zur Herstellung eines Fußbodenbelags, so können zusätzlich hohe Abriebwerte erzielt werden, indem zusätzlich z.B. Korund mit einer Körnung von 40 - 140 µm nach den an sich bekannten Verfahren appliziert wird.

Die Trägerplatte bzw. Trägerlage besteht vorzugsweise aus einer Platte aus MDF oder HDF mit einer Plattenstärke von 4-40 mm und das verwendete Harz ist wiederrum vorzugsweise ein Aminoharz, insbesondere ein Melaminharz und/oder Harnstoffharz.

Im Folgenden wird die Erfindung anhand einiger Ausführungsbeispiele detaillierter erläutert:

### Beispiel 1: Herstellung einer Mikrokorund-Dispersion

Es werden 40 kg Wasser, 4 kg eines niedrig ethoxylierten Fettalkohols (z.B. Lutensol TO₃ der BASF), 4 kg Natriumdioctylsulfosuccinat (Lutensit A-BO der BASF), 4 kg Natriumpolyacrylat (z.B. Lopon LF; BK Giulini) vorgelegt. Diese Mischung wird 5 min bei Raumtemperatur verrührt. Anschließend werden unter Rühren 47,5 kg Korund der Körnung F1000 zugesetzt. Danach werden 0,5 kg Schichtsilikat (entspricht dem Verdickungsmittel) (Betone EW; Elementis) zugefügt. Man dispergiert nun 10 min bei einer Scherrate von 15 m/min. Anstelle des Schichtsilikats können gleiche Teile eines Polysaccharids (Gummi Arabicum oder Johannesbrotmehl) zugefügt werden. Es können auch Kombiantionen aus Gummi Arabicum und Bentone EW vorgenommen werden.

### Beispiel 2: Herstellung einer Imprägnierharzmischung

Als Ausgangsbasis dient die Mikrokorund-Dipersion aus Beispiel 1 sowie 90 kg eines handelsüblichen Melamin-Formaldehyd-Tränkharzes mit einem Feststoffgehalt von 60 %. Dieses wird mit 0,37 kg eines geeigneten Melaminharzhärters, 0,21 kg eines Netzmittels, 0,45 kg eines Trennmittels und 8,15 kg Wasser versetzt. Die Trübungszeit sollte zwischen 5:00 und 5:30 min liegen. Unter Rühren werden 0,82 kg der in Beispiel 1 beschriebenen Mikrokorunddispersion zugefügt (dies entspricht demnach 1,52 kg Dispersion pro 100 kg Feststoffgehalt des Tränkharzes). Die so hergestellte Harzmischung wird in die Imprägnierwanne eines handelsüblichen Imprägnierkanals gegeben.

### Beispiel 3: Herstellung eines Laminatfußbodens mit mikrokratzfester Oberfläche

Ein korundhaltiges Overlaypapier mit einer Grammatur von 60 g/m² wird mit der Harzmischung aus Beispiel 2 imprägniert. Hierzu wird ein Harzauftrag von 280 % eingestellt, d.h. die Flächenmasse des Imprägnates beträgt 228 g/m². Unter Imprägnat versteht der Fachmann hier das imprägnierte Papier nach Trocknung, jedoch vor der Aushärtung des Harzes. Die Messung erfolgt also nachdem das imprägnierte Papier getrocknet wurde. Dies hat praktische Gründe, da sich in industriellen Anlagen direkt an das Imprägnierbad bzw. den Imprägnierkanal ein Trockner anschließt, so dass eine Probenentnahme zur Messung der Harzgehalts üblicherweise erst nach Trocknung möglich bzw. sinnvoll ist. Die entnommene Probe wird dann z.B. zu einem Blatt von 100 cm² zurechtgeschnitten und gewogen. Die Differenz zwischen dem Gewicht des Ausgangspapiers (also hier den 60 g/m²) und dem gewogenen Wert entspricht in etwa der aufgebrachten Harzmenge (etwaige Unterschiede in der unvermeidbaren Restfeuchte nach Trocknung sind sehr gering und vernachlässigbar). Im vorliegenden Beispiel enthält das Imprägnat im getrockneten Zustand also etwa 168 g/m² Harzauftrag (280% von 60 g/m²). Das Imprägnat wird sodann wie folgt weiter verarbeitet: Auf der Unterseite einer HDF-Trägerplatte mit einer Stärke von 8 mm wird ein herkömmlich imprägniertes Gegenzugpapier vorgesehen und auf der Oberseite der Trägerplatte ein herkömmlich imprägniertes Dekorpapier. Auf dieses Dekorpapier wird dann als oberste Schicht das imprägnierte Overlay angeordnet. Dieser Sandwich-Verbund wird in eine Kurztaktpresse eingetragen und 15 s bei 185 °C verpresst. Nach Abkühlen und Ablagern der so erhaltenen beschichteten Laminat-Werkstoffplatte erfolgt das Aufteilen und das bekannte Profilfräsen zu Fußbodenpaneelen. Ein so hergestelltes Fußbodenpaneel erreicht die Abriebklasse AC5 nach EN 13329 und die höchste Mikrokratzfestigkeitsstufe MSR-A1 sowie MSR-B1 nach EN 16094.

### Beispiel 4: Herstellung eines Schichtstoffes mit mikrokratzfester Oberfläche

Ein Overlay mit einer Flächenmasse von 25 g/m² wird mit der in Beispiel 2 beschriebenen Harzmischung imprägniert. Der Harzauftrag wir auf 300 % eingestellt, so dass die Flächenmasse des Imprägnates etwa 100 g/m² beträgt. Eine Doppelbandpresse (wie etwa von der Firma Hymmen erhältlich) wird dann von unten nach oben wie folgt bestückt: Pergamentpapier 50 g/m², zwei phenolharzgetränkte Kernlagen mit je einer Flächenmasse von 278 g/m², ein melaminharzgetränktes Dekorpapier und das beschriebene Overlay. Dieser Sandwich-Verbund wird durch die Doppelbandpresse bei einer Oberflächentemperatur von 180 °C und einer Geschwindigkeit von 12 m/min geführt. Der so erhaltene Laminat-Werkstoff bzw. das Laminat wird auf der Rückseite angeschliffen und auf eine 38 mm starke Spanplatte verleimt. Auf diese Weise erhält man eine Küchenarbeitsplatte mit der höchsten Mikrokratzfestigkeitseinstufung MSR-A1 und MSR-B1 nach EN 16094. Bei einem Vergleichstest mit einer herkömmlichen Melaminharzoberfläche erhält man nur die Einstufung MSR-A3 und MSR-B4.

### Beispiel 5: Herstellung einer direktbeschichteten Spanplatte für Möbeloberflächen

Ein Dekorpapier mit einer Eichenachbildung und einer Grammatur von 70 g/m² wird mit der Imprägnierharzmischung aus Beispiel 2 imprägniert. Der Harzauftrag beträgt 135 %, d.h. die Flächenmasse des Imprägnates etwa 164,5 g/m² beträgt (d.h. 70 g/m² Papier plus 94,5 g/m² Harzauftrag). Eine Spanplatte mit einer Stärke von 18 mm wird beidseitig mit dem Dekorimprägnat kombiniert und in einer Kurztaktpresse 18 s bei 185 °C verpresset. Der auf diese Weise erhaltene Laminat-Werkstoff hat eine Oberfläche mit der höchsten Mikrokratzfestigkeitseinstufung MSR-A1 und MSR-B1.

Diese Ausführungsbeispiele belegen, dass man völlig überraschend bei der beschriebenen Vorgehensweise mit äußerst geringen Zusätzen an Mikrokorund die höchste Mikrokratzfestigkeitseinstufung erreichen kann. Im Beispiel 5 beträgt der Mikrokorundgehalt beispielsweise 0,7 g/m². Der Prozess ist dabei robust, es kommt zu keinen Absatzerscheinungen in der Imprägnierwanne, auch nicht über längere Produktionszeiträume. Ein weiterer Vorteil der äußerst geringen Konzentration an Mikrokorund besteht natürlich auch darin, dass weitere Verarbeitungsprozesse nicht nachteilhaft beeinflusst werden und dass die Oberfläche hochtransparent bleibt und nicht durch Zusatzstoffe eingetrübt wird.

### 4. Beschreibung von bevorzugten Ausführungsformen

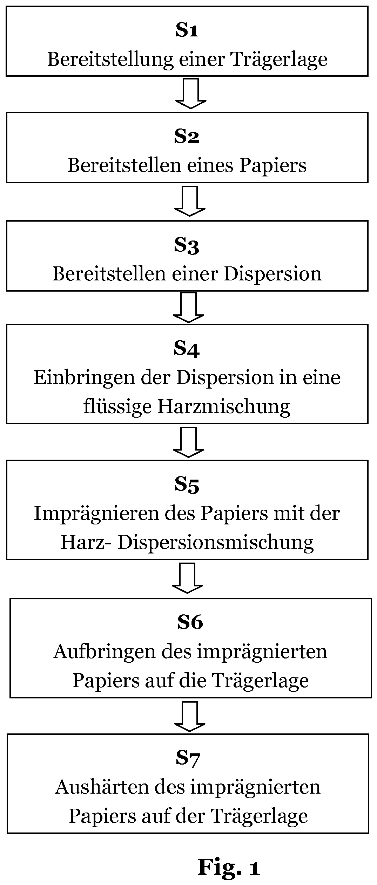

Im Folgenden wird die Erfindung anhand der Figuren näher erläutert, wobei
Figur 1 ein Schaubild eines erfindungsgemäßen Verfahrens ist.

In Figur 1 ist ein erfindungsgemäßes Verfahren beispielhaft veranschaulicht. Dem Fachmann ist klar, dass die Schritte S1 bis S7 des dargestellten Verfahrens nicht zwangsläufig in der angegebenen Reihenfolge stattfinden müssen, sondern in jeder logischen Reihenfolge stattfinden können. Insbesondere ist es beispielsweise unerheblich, ob die Schritte S1 und S2 vor S3 und S4 stattfinden. In einem ersten Schritt S1 des beispielhaften Verfahrens wird eine Trägerlage aus MDF bereitgestellt, wie etwa eine 6 mm starke MDF-Platte. In Schritt S2 wird ein Papier bereitgestellt, wie etwa ein Dekorpapier, d. h. ein mit einem dekorativen Muster bedruckter Papierbogen. Im Schritt S3 wird sodann eine erfindungsgemäße Dispersion gemäß der obigen Angaben hergestellt und in Schritt S4 in eine flüssige Harzmischung aus Melaminharz und den üblichen Additiven eingebracht und verrührt. In Schritt S5 wird diese Harz-Dispersionsmischung dem Papier zugeführt und dieses mit der Mischung imprägniert. Das so imprägnierte Papier wird zwischengetrocknet und anschließend auf die Trägerlage aus MDF aufgelegt. In einer Bandpresse wird dann unter Einwirkung von Hitze und Druck das so imprägnierte Papier auf der Trägerlage ausgehärtet, so dass ein Laminat-Werkstoff entsteht, dass eine hervorragende Mikrokratzfestigkeit aufweist und beispielsweise zu Fußbodenpaneelen oder Möbelplatten weiter verarbeitet werden kann.

## Patentansprüche

1. Dispersion zur Herstellung eines mit einem Harz imprägnierten Papiers, umfassend folgende Bestandteile in Gewichtsprozent:
| | |
|---|---|
| 30 bis 75 % | Wasser; |
| 10 bis 65 % | Korundpartikel mit einer Korngröße von F400 bis F2000; |
| 0,05 bis 5 % | anionische Dispergiermittel; |
| 0,05 bis 5 % | Natrium-Polyacrylat; |
| 0,1 bis 5 % | nichtionische Tenside; |
| 0,01 bis 2 % | Verdickungsmittel. |

2. Dispersion nach Anspruch 1, **dadurch gekennzeichnet, dass** die Bestandteile in Gewichtsprozent wie folgt sind:
| | |
|---|---|
| 35 bis 70 % | Wasser; |
| 20 bis 60 % | Korundpartikel mit einer Korngröße von F400 bis F2000; |
| 0,06 bis 4 % | anionische Dispergiermittel; |
| 0,06 bis 4 % | Natrium-Polyacrylat; |
| 0,15 bis 4 % | nichtionische Tenside; |
| 0,02 bis 2 % | Verdickungsmittel. |

3. Dispersion nach Anspruch 2, **dadurch gekennzeichnet, dass** die Bestandteile in Gewichtsprozent wie folgt sind:
| | |
|---|---|
| 40 bis 68 % | Wasser; |
| 30 bis 58 % | Korundpartikel mit einer Korngröße von F400 bis F2000; |
| 0,07 bis 3,5 % | anionische Dispergiermittel; |
| 0,07 bis 3,5 % | Natrium-Polyacrylat; |
| 0,2 bis 3,5 % | nichtionische Tenside; |
| 0,03 bis 2 % | Verdickungsmittel. |

4. Dispersion nach einem der vorhergehenden Ansprüche, **dadurch gekennzeichnet, dass** das Verdickungsmittel ein Schichtsilikat oder ein Polysaccharid umfasst und vorzugsweise ein Schichtsilikat oder ein Polysaccharid ist.

5. Dispersion nach einem der vorhergehenden Ansprüche, **dadurch gekennzeichnet, dass** die Korundpartikel silanisiert sind.

6. Dispersion nach einem der vorhergehenden Ansprüche, **dadurch gekennzeichnet, dass** die Korundpartikel eine Korngröße von F500 bis F2000 haben, mehr bevorzugt von F600 bis F1000.

7. Verfahren zur Herstellung eines Laminat-Werkstoffs, umfassend die folgenden Schritte:
a) Bereitstellen einer Trägerlage;
b) Bereitstellen eines Papiers;
c) Bereitstellen einer Dispersion gemäß einem der Ansprüche 1 bis 6, oder einer Dispersion umfassend folgende Bestandteile in Gewichtsprozent:
| | |
|---|---|
| • 20 bis 75 % | Wasser; |
| • 10 bis 65 % | Korundpartikel mit einer Korngröße von F400 bis F2000; |
| • 0,5 bis 15 % | anionische Dispergiermittel oder 0,5 bis 15% einer Mischung aus anionischen Dispergiermitteln und nichtionischen Tensiden; und |
| • 0,01 bis 2 % | Verdickungsmittel; |
d) Einbringen der Dispersion in eine flüssige Harzmischung, wobei auf 100 kg Harz bezogen auf den Feststoffgehalt 0,5 bis 7 kg Dispersion eingebracht werden, mehr bevorzugt 0,5 bis 5 kg und am meisten bevorzugt 0,6 bis 3 kg; danach
e) Imprägnieren des Papiers mit der Harz- Dispersionsmischung;
f) Aufbringen des imprägnierten Papiers auf die Trägerlage; und
g) Aushärten des imprägnierten Papiers auf der Trägerlage.

8. Verfahren zur Herstellung eines Laminats gemäß Anspruch 7, **dadurch gekennzeichnet, dass** das Harz ein Aminoharz ist und insbesondere ein Melaminharz und/oder Harnstoffharz ist.

9. Verfahren zur Herstellung eines Laminat-Werkstoffs gemäß einem der vorhergehenden Verfahrensansprüche, **dadurch gekennzeichnet, dass** das Aushärten des imprägnierten Papiers durch Hitze und/oder Druck, vorzugsweise in einer Presse erfolgt.

10. Verfahren zur Herstellung eines Laminat-Werkstoffs gemäß einem der vorhergehenden Verfahrensansprüche, **dadurch gekennzeichnet, dass** die Dispersion vor dem Schritt d) für mindestens 10 Minuten mit einer Scherrate von zumindest 10 m/sec, vorzugsweise zumindest 12 m/sec und am meisten bevorzugt zumindest 15 m/sec, verrührt wird.

11. Verfahren zur Herstellung eines Laminat-Werkstoffs gemäß einem der vorhergehenden Verfahrensansprüche, **dadurch gekennzeichnet, dass** die Trägerlage aus Holz, einem Holzwerkstoff oder einem Schichtstoff besteht.

12. Laminat-Werkstoff, aufweisend eine Trägerlage aus Holz, einem Holzwerkstoff oder einem Schichtstoff,
- wobei zumindest auf einer Hauptseite der Trägerlage ein mit einem Harz imprägniertes Papier vorgesehen ist, welches
- Korundpartikel mit einer Korngröße von F400 bis F2000 umfasst; wobei
- das Laminat eine Mikrokratzfestigkeit nach EN 16094:2012-04 von zumindest MSR-A2, vorzugsweise MSR-A1, aufweist und eine Beständigkeitsklasse von zumindest MSR-B2, vorzugsweise MSR-B1; und welches Laminat erhältlich ist durch Imprägnieren des Papiers mit dem folgenden Verfahren:
a) Bereitstellen einer Dispersion gemäß einem der Ansprüche 1 bis 6, oder einer Dispersion umfassend folgende Bestandteile in Gewichtsprozent:
| | |
|---|---|
| • 20 bis 75 % | Wasser; |
| • 10 bis 65 % | Korundpartikel mit einer Korngröße von F400 bis F2000; |
| • 0,5 bis 15 % | anionische Dispergiermittel oder 0,5 bis 15% einer Mischung aus anionischen Dispergiermitteln und nichtionischen Tensiden; und |
| • 0,01 bis 2 % | Verdickungsmittel; |
b) Einbringen der Dispersion in eine flüssige Harzmischung, wobei auf 100 kg Harz bezogen auf den Feststoffgehalt 0,5 bis 6 kg Dispersion eingebracht werden, mehr bevorzugt 0,5 bis 5 kg und am meisten bevorzugt 0,6 bis 4 kg; und danach
c) Imprägnieren des Papiers mit der Harz- Dispersionsmischung.

13. Laminat-Werkstoff nach Anspruch 12, **dadurch gekennzeichnet, dass** das Harz ein Aminoharz ist und insbesondere ein Melaminharz und/oder Harnstoffharz ist.

14. Laminat-Werkstoff nach Anspruch 12 oder 13, **dadurch gekennzeichnet, dass** die Trägerlage eine Platte aus MDF oder HDF mit einer Plattenstärke von 4 bis 40 mm ist.

15. Laminat-Werkstoff nach einem der Ansprüche 12 bis 14, **dadurch gekennzeichnet, dass** das mit Harz imprägnierte Papier einen Korundgehalt von 0,3 bis 3 g/m² aufweist, mehr bevorzugt von 0,3 bis 2 g/m², noch mehr bevorzugt von 0,4 bis 1,5 g/m² und am meisten bevorzugt von 0,4 bis 1 g/m².

## Claims

1. A dispersion for producing a resin impregnated paper comprising the following components in weight percent:
30 to 75 % water;
10 to 65 % of corundum particles having a grain size of F400 to F2000;
0.05 to 5 % anionic dispersing agent;
0.05 to 5 % sodium polyacrylate;
0.1 to 5 % nonionic tensides;
0.01 to 2 % thickening agent.

2. Dispersion according to claim 1, **characterized in that** the components are as follows in weight percent:
35 to 70 % water;
20 to 60 % of corundum particles having a particle size of F400 to F2000;
0.06 to 4 % anionic dispersing agent;
0.06 to 4 % sodium polyacrylate;
0.15 to 4 % nonionic tensides;
0.02 to 2 % thickening agent.

3. Dispersion according to claim 2, **characterized in that** the constituents are as follows in weight percent:
40 to 68 % water;
30 to 58 % of corundum particles having a particle size of F400 to F2000;
0.07 to 3.5 % anionic dispersing agent;
0.07 to 3.5 % sodium polyacrylate;
0.2 to 3.5 % nonionic tensides;
0.03 to 2 % thickening agent.

4. Dispersion according to one of the preceding claims, **characterized in that** the thickening agent comprises a layered silicate or a polysaccharide and is preferably a layered silicate or a polysaccharide.

5. Dispersion according to one of the preceding claims, **characterized in that** the corundum particles are silanized.

6. Dispersion according to one of the preceding claims, **characterized in that** the corundum particles have a grain size from F500 to F2000, more preferably from F600 to F1000.

7. A method for producing a laminate material comprising the following steps:
a) providing a support layer;
b) providing a paper;
c) providing a dispersion according to any one of claims 1 to 6, or a dispersion comprising the following components in weight percent:
- 20 to 75 % water;
- 10 to 65 % of corundum particles having a grain size of F400 to F2000;
- 0.5 to 15 % of anionic dispersing agent or 0.5 to 15 % of a mixture of anionic dispersing agent and nonionic tensides; and
- 0.01 to 2 % thickening agent;
d) introducing of the dispersion into a liquid resin mixture, wherein per 100 kg of resin based on solids content 0.5 to 7 kg of dispersion are introduced, more preferably 0.5 to 5 kg and most preferably 0.6 to 3 kg; thereafter
e) impregnating the paper with the resin dispersion mixture;
f) applying the impregnated paper to the backing layer; and
g) curing of the impregnated paper on the support layer.

8. Method for producing a laminate according to claim 7, **characterized in that** the resin is an amino resin and in particular is a melamine resin and/or urea resin.

9. Method for producing a laminate material according to one of the preceding method claims, **characterized in that** the curing of the impregnated paper takes place by heat and/or pressure, preferably in a press.

10. Method for producing a laminate material according to one of the preceding method claims, **characterized in that** the dispersion is stirred prior to step d) for at least 10 minutes at a shear rate of at least 10 m/sec, preferably at least 12 m/sec and most preferably at least 15 m/sec.

11. Method for producing a laminate material according to one of the preceding method claims, **characterized in that** the support layer consists of wood, a wood-based material or a laminate.

12. A laminate material comprising a support layer of wood, a wood-based material or a laminate,
- wherein a paper impregnated with a resin is provided at least on one main side of the support layer, said
- comprising corundum particles having a grain size of F400 to F2000; wherein
- the laminate has a micro-scratch resistance according to EN 16094:2012-04 of at least MSR-A2, preferably MSR-A1, and a resistance class of at least MSR-B2, preferably MSR-B1;
and which laminate is obtainable by impregnating the paper with the following process:
a) providing a dispersion according to any one of claims 1 to 6, or a dispersion comprising the following ingredients in weight percent:
- 20 to 75 % water;
- 10 to 65 % of corundum particles having a grain size of F400 to F2000;
- 0.5 to 15 % of anionic dispersing agent or 0.5 to 15% of a mixture of anionic dispersant and nonionic tensides; and
- 0.01 to 2 % thickening agent;
b) introducing the dispersion into a liquid resin mixture, wherein per 100 kg of resin based on solids content 0.5 to 6 kg of dispersion are introduced, more preferably 0.5 to 5 kg and most preferably 0.6 to 4 kg; and thereafter
c) impregnating the paper with the resin dispersion mixture.

13. Laminate material according to claim 12, **characterized in that** the resin is an amino resin and in particular is a melamine resin and/or urea resin.

14. Laminate material according to claim 12 or 13, **characterized in that** the carrier layer is a board made of MDF or HDF with a board thickness of 4 to 40 mm.

15. Laminate material according to one of claims 12 to 14, **characterized in that** the resin impregnated paper has a corundum content of 0.3 to 3 g/m², more preferably 0.3 to 2 g/m², even more preferably 0.4 to 1.5 g/m² and most preferably 0.4 to 1 g/m².

## Revendications

1. Dispersion pour la fabrication d'un papier imprégné d'une résine, comprenant les constituants suivants, en pourcents en poids :
| | |
|---|---|
| 30 à 75 % | d'eau ; |
| 10 à 65 % | de particules de corindon présentant une granulométrie de F400 à F2000; |
| 0,05 à 5 % | de dispersants anioniques ; |
| 0,05 à 5 % | de poly(acrylate de sodium) ; |
| 0,1 à 5 % | de tensioactifs non ioniques ; |
| 0,01 à 2 % | d'un épaississant. |

2. Dispersion selon la revendication 1, **caractérisée en ce que** les constituants sont les suivants, en pourcents en poids :
| | |
|---|---|
| 35 à 70 % | d'eau |
| 20 à 60 % | de particules de corindon présentant une granulométrie de F400 à F2000; |
| 0,06 à 4 % | de dispersants anioniques ; |
| 0,06 à 4 % | de poly(acrylate de sodium) ; |
| 0,15 à 4 % | de tensioactifs non ioniques ; |
| 0,02 à 1 % | d'un épaississant. |

3. Dispersion selon la revendication 2, **caractérisée en ce que** les constituants sont les suivants, en pourcents en poids :
| | |
|---|---|
| 40 à 68 % | d'eau ; |
| 30 à 58 % | de particules de corindon présentant une granulométrie de F400 à F2000; |
| 0,07 à 3,5 % | de dispersants anioniques ; |
| 0,07 à 3,5 % | de poly(acrylate de sodium) ; |
| 0,2 à 3,5 % | de tensioactifs non ioniques ; |
| 0,03 à 2 % | d'un épaississant. |

4. Dispersion selon l'une des revendications précédentes, **caractérisée en ce que** l'épaississant comprend un phyllosilicate ou un polysaccharide et est de préférence un phyllosilicate ou un polysaccharide.

5. Dispersion selon l'une des revendications précédentes, **caractérisée en ce que** les particules de corindon sont silanisées.

6. Dispersion selon l'une des revendications précédentes, **caractérisée en ce que** les particules de corindon présentent une granulométrie de F500 à F2000, plus préférentiellement de F600 à F1000.

7. Procédé de fabrication d'un matériau stratifié, comprenant les étapes suivantes :
a) fourniture d'une couche support ;
b) fourniture d'un papier ;
c) fourniture d'une dispersion selon l'une des revendications 1 à 6, ou d'une dispersion comprenant les constituants suivants, en pourcents en poids :
| | |
|---|---|
| • 20 à 75 % | d'eau ; |
| • 10 à 65 % | de particules de corindon présentant une granulométrie de F400 à F2000; |
| • 0,5 à 15 % | de dispersants anioniques ou 0,5 à 15 % d'un mélange de dispersants anioniques et de tensioactifs non ioniques ; et |
| • 0,01 à 2 % | d'un épaississant ; |
d) introduction de la dispersion dans un mélange liquide de résine, la quantité introduite de la dispersion, pour 100 kg de résine exprimés en extrait sec, étant de 0,5 à 7 kg, plus préférentiellement de 0,5 à 5 kg et tout spécialement de 0,6 à 3 kg ; puis
e) imprégnation du papier avec le mélange résine-dispersion ;
f) application du papier imprégné sur la couche support ; et
g) durcissement du papier imprégné se trouvant sur la couche support.

8. Procédé de fabrication d'un stratifié selon la revendication 7, **caractérisé en ce que** la résine est une résine aminée, en particulier une résine de mélamine et/ou une résine d'urée.

9. Procédé de fabrication d'un matériau stratifié selon l'une des revendications précédentes, **caractérisé en ce que** le durcissement du papier imprégné est réalisé sous l'effet de la chaleur et/ou de la pression, de préférence dans une presse.

10. Procédé de fabrication d'un matériau stratifié selon l'une des revendications précédentes **caractérisé en ce que** la dispersion est, avant l'étape d), délayée pendant au moins 10 minutes avec une vitesse de cisaillement d'au moins 10 m/s, de préférence d'au moins 12 m/s et tout spécialement d'au moins 15 m/s.

11. Procédé de fabrication d'un matériau stratifié selon l'une des revendications précédentes, **caractérisé en ce que** la couche support est constituée de bois, d'un matériau à base de bois ou d'un stratifié.

12. Matériau stratifié présentant une couche support en bois, en un matériau à base de bois ou en un stratifié,
- dans lequel un papier imprégné d'une résine est prévu au moins sur une face principale de la couche support, papier qui comprend
- des particules de corindon présentant une granulométrie de F400 à F2000 ;
- le matériau stratifié présentant une résistance aux microrayures selon EN 1694:2012-04 d'au moins MSR-A₂, de préférence MSR-A₁, et une classe de résistance d'au moins MSR-B₂, de préférence MSR-B1 ; lequel matériau stratifié pouvant être obtenu par imprégnation du papier par le procédé suivant :
a) fourniture d'une dispersion selon l'une des revendications 1 à 6, ou d'une dispersion comprenant les constituants suivants, en pourcents en poids :
| | |
|---|---|
| • 20 à 75 % | d'eau ; |
| • 10 à 65 % | de particules de corindon présentant une granulométrie de F400 à F2000; |
| • 0,5 à 15 % | de dispersants anioniques ou 0,5 à 15 % d'un mélange de dispersants anioniques et de tensioactifs non ioniques ; et |
| • 0,01 à 2 % | d'un épaississant ; |
b) introduction de la dispersion dans un mélange liquide de résine, la quantité introduite de la dispersion, pour 100 kg de résine exprimés en extrait sec, étant de 0,5 à 6 kg, plus préférentiellement de 0,5 à 5 kg et tout spécialement de 0,6 à 4 kg ; puis
c) imprégnation du papier avec le mélange résine-dispersion.

13. Matériau stratifié selon la revendication 12, **caractérisé en ce que** la résine est une résine aminée et en particulier une résine de mélamine et/ou une résine d'urée.

14. Matériau stratifié selon la revendication 12 ou 13, **caractérisé en ce que** la couche support est un panneau de MDF ou de HDF présentant une épaisseur de panneau de 4 à 40 mm.

15. Matériau stratifié selon l'une des revendications 12 à 14, **caractérisé en ce que** le papier imprégné de résine présente une teneur en corindon de 0,3 à 3 g/m², plus préférentiellement de 0,3 à 2 g/m², d'une manière encore plus préférée de 0,4 à 1,5 g/m² et tout spécialement de 0,4 à 1 g/m².
